(19) Europäisches Patentamt
European Patent Office
Office européen des brevets

(11) Publication number: 0 162 137 B1

# (12) EUROPEAN PATENT SPECIFICATION

(45) Date of publication of patent specification: 14.06.89

(51) Int. Cl.[4]: C 01 B 21/064

(21) Application number: 84114769.7

(22) Date of filing: 05.12.84

## (54) Method for preparing boron nitride.

(30) Priority: 21.05.84 JP 100682/84

(43) Date of publication of application:
27.11.85 Bulletin 85/48

(45) Publication of the grant of the patent:
14.06.89 Bulletin 89/24

(84) Designated Contracting States:
AT DE FR GB IT SE

(56) References cited:
CH-A- 362 061

(73) Proprietor: TOSHIBA TUNGALOY CO. LTD.
1-7 Tsukagoshi Saiwai-ku
Kawasaki-shi Kanagawa-ken (JP)

(72) Inventor: Hirano, Shin-ichi
66, Yadacho 2-chome Higashi-ku
Nagoya-shi Aichi-ken (JP)
Inventor: Naka, Shigeharu
11-25, Kasumigaoka 1-chome Chikusa-ku
Nagoya-shi Aichi-ken (JP)

(74) Representative: Hansen, Bernd, Dr.rer.nat. et al
Hoffmann, Eitle & Partner Patentanwälte
Arabellastrasse 4 Postfach 81 04 20
D-8000 München 81 (DE)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a method for preparing boron nitride, more particularly to a method for preparing boron nitride which has a high conversion rate into cubic boron nitride.

In recent years, much attention has been paid particularly to sintered bodies of boron nitride as fine ceramics. With regard to kinds of boron nitride stable under a high pressure, cubic boron nitride and wurtzite boron nitride are known. Among them, cubic boron nitride has been spotlighted of late because of being excellent in hardness and abrasion resistance, and new applications of cubic boron nitride to materials for tools are now considered to be promising. Further, since they have both an extremely high thermal conductivity and electrical resistance, sintered bodies of cubic boron nitride are expected to be useful as heat sink material in high-density integrated circuits.

The techniques for manufacturing a cubic boron nitride sintered body stable under a high pressure can roughly be classified as two methods, an indirect method and a direct method. The indirect method comprises, using as the starting material, a cubic boron nitride, which was prepared by the steps of converting a mixture of hexagonal boron nitride and a catalyst into cubic boron nitride through a reaction at high pressure and a high temperature, removing the used catalyst and the remaining unreacted hexagonal boron nitride from the system by chemical means, sintering the thus prepared cubic boron nitride under an ultra-high pressure and at a high temperature (e.g., 5 GPa or more and 1200°C or higher), alternatively further adding thereto a cubic boron nitride powder, a binder mainly including TiN or $Al_2O_3$ and, if necessary, a metal and/or a metallic compound, and again carrying out a high-pressure and high-temperature reaction to prepare the cubic boron nitride sintered body. On the other hand, the direct method comprises, using as the starting material, a boron nitride other than the cubic boron nitride, subjecting a mixture of the boron nitride and a catalyst to a high-pressure and high-temperature reaction, whereby the boron nitride is converted into cubic boron nitride and simultaneously the cubic boron nitride sintered body can be prepared. The prepared cubic boron nitride sintered body is composed of directly bonded cubic boron nitride grains.

Of these two methods, the former utilizes the two high-pressure and high-temperature treatment steps which involve great costs, but the latter requires such a costly treatment step only once. Therefore, it seems that the latter is more suitable than the former. This reason will be easily understandable, in that in the direct method, the conversion rate of hexagonal boron nitride into cubic boron nitride will be below 100% in almost all cases, and the remaining unreacted hexagonal boron nitride will noticeably impair properties and a performance of the prepared sintered body.

Therefore, the indirect method has been utilized for preparation of cubic boron nitride sintered bodies in practice.

The boron nitride materials mentioned above include, besides cubic boron nitride, hexagonal boron nitride, wurtzite boron nitride and amorphous boron nitride. The synthesis of cubic boron nitride may be principally accomplished by treating hexagonal boron nitride under an ultra-high pressure and at a high temperature to convert the latter into former.

However, its conversion rate is generally low in such a case. The present inventors have found that the factors having the greatest influence on the conversion of the boron nitride starting material into cubic boron nitride are a crystallinity index of the boron nitride starting material and a content of oxygen contained in the same. On the basis of this finding, Japanese Patent Publications No. 37200/1981 and No. 34429/1983 set out methods for manufacturing cubic boron nitride sintered bodies and cubic boron nitride which comprise treating a mixture of hexagonal boron nitride and aluminium nitride as a catalyst at a high temperature and a high pressure under a condition of 2% by volume or less of an oxygen content of the mixture.

While various investigations have been conducted in order to increase the conversion rate of hexagonal boron nitride into cubic boron nitride, the present inventors have found that when the synthesis of cubic boron nitride from hexagonal boron nitride is carried out in the presence of aluminum nitride, the conversion rate has been improved, and this has already been published (see Funtai Funmatsu Yakin Kyokai, Outline Booklet at Autumn Congress Lecture, 1982, pp. 100—101).

The present inventors have further conducted on the relationship between the crystallinity of hexagonal boron nitride and the conversion rate, and as a result, it has been confirmed that the boron nitride which has smaller crystallinity, i.e., amorphous boron nitride has the highest conversion rate into cubic boron nitride (see Funtai Funmatsu Yakin Kyokai, Outline Booklet at Spring Congress Lecture, 1983, pp. 96—97).

For this reason, it is now confirmed that if amorphous boron nitride is used as a starting material, cubic boron nitride can be synthesized in a high yield.

Moreover, the present inventors' researches have been extended to a region of various compounds usable as materials for amorphous boron nitride, and in consequence, they have accomplished this invention.

This invention can overcome problems concomitant to the above-mentioned conventional methods for manufacturing boron nitride, and an object of this invention is to provide a method for preparing amorphous boron nitride which is suitable as a starting material for the preparative

methods for cubic boron nitride sintered bodies and cubic boron nitride.

The present inventors' researches have been extended to a region of various compounds usable as source materials for amorphous boron nitride, and in consequence, they have found the fact that when each of undermentioned compounds is pyrolyzed at a predetermined temperature and pressure, a white solid of amorphous boron nitride will be obtained, and advantageously, the activation energy in the conversion reaction of amorphous boron nitride into cubic boron nitride is extremely low and thus this conversion rate is high.

The method for preparing boron nitride in high yield according to this invention comprises pyrolyzing at least one compound selected from the group consisting of borazine and a borazine derivative under conditions of at a temperature of 150 to 700°C and at a pressure of 10 magapascal (MPa) or more.

Figure 1 is a diffraction pattern of infrared adsorption spectrum showing a crystallinity of boron nitride prepared by the pyrolysis of borazine;

Figure 2 is a graph showing a conversion rate of boron nitride prepared by the pyrolysis of borazine into cubic boron nitride under a pressure of 6.5 GPa;

Figure 3 is a diagram showing relations between ratios of B—N and B—H absorption intensities obtained by an IR analysis and temperatures of a pyrolysis with regard to amorphous boron nitride prepared in Example 1;

Figure 4 is a diagram showing relations between molar conversion rates into cubic boron nitride and temperatures of pyrolysis; and

Figure 5 is a straight-line graph for calculating an activation energy, which shows relations between 1nτ and $10^4$/T.

This invention will be explained in more detail in the following:

In the preparative method of the boron nitride of this invention, boron nitride is prepared by pyrolyzing borazine and/or borazine derivatives. The condition of pyrolysis is carried out under the condition of at a temperature of 150 to 700°C and at a pressure of 10 MPa or more.

Borazine used in this invention is a compound having a following formula:

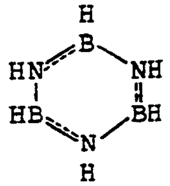

Further, borazine derivatives used in this invention include a compound having a chemical formula BxNyHz

wherein x, y and z each represent an integer, and in view of handling, liquid or solid compound is more preferable. Examples of such compounds include borazonaphthalene represented by the following formula:

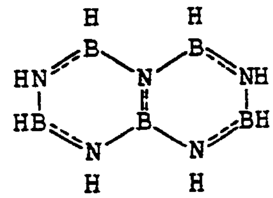

borazobiphenyl represented by the following formula:

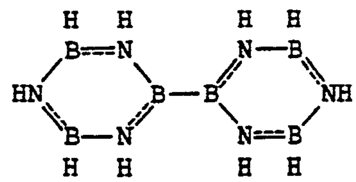

and 2,4-diaminoborazine represented by the following formula:

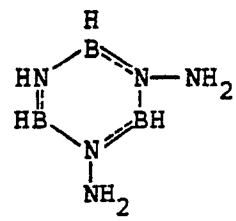

Of these materials, borazine is particularly preferable.

It is significant that the used starting material includes neither oxygen nor carbon. This is that oxygen acts as a factor for lowering the conversion rate into cubic boron nitride and that carbon will remain in boron nitride when a pyrolyzing treatment is carried out under conditions described hereinafter. If the boron nitride including the remaining carbon component is subjected to a high-pressure and high-temperature synthetic treatment, this carbon component will be changed into graphite and will remain in the prepared cubic boron nitride, which graphite will lead to the deterioration in properties of the cubic boron nitride sintered body.

In the method of preparing boron nitride of this invention, the above-mentioned material is placed in a closed pressure vessel and is subjected to a pyrolyzing treatment.

In this case, the temperature and pressure are adjusted to the range of 150 to 700°C and 10 MPa or more, respectively. As the pyrolyzing temperature rises, the content of hydrogen in the boron nitride will decrease but simultaneously the conversion rate into cubic boron nitride will also decrease. Therefore, the temperature of the pyrolysis is preferably adjusted to 700°C or less. However, when the temperature of the pyrolysis is less than 150°C, the prepared boron nitride material will be too reactive, and it would thus be necessary that the boron nitride material is hand-

led in a $N_2$ gas or an inert gas atmosphere. In order to avoid such a troublesome handling, the temperature of the pyrolysis is preferably adjusted to 150°C or more, as mentioned above.

Further, the pressure in the aforesaid treatment varies with the amount of borazine or a borazine derivative to be pyrolyzed, and it must be at a level enough to suppress hydrogen released from borazine or the borazine derivative during the pyrolyzing treatment. A satisfactory value of the pressure is 10 MPa or more.

A treatment time in this case is not particularly limited, but it is generally 10 minutes or more.

With regard to desirable conditions to obtain boron nitride which is high in its conversion rate into cubic boron nitride and easy in handling as a starting material for this invention, the temperature is within the range of 200 to 300°C, the pressure is within the range of 50 to 150 MPa, and the pyrolyzing period is within the range of 30 to 120 minutes.

The thus prepared amorphous boron nitride can be converted into cubic boron nitride in an ordinary manner, or can be employed to prepare a cubic boron nitride sintered body from cubic boron nitride as a starting material.

For example, the following manner can be employed for preparation of cubic boron nitride sintered body or cubic boron nitride. Namely, mixing the boron nitride obtained by the present invention with a catalyst composed of a metal and/or a metallic compound. The catalyst employed serves as the reaction agent of boron nitride or substrate for the nucleation site of cubic boron nitride under a pressure of 3 GPa or more and at a temperature of 700°C or more to obtain a cubic boron nitride sintered body.

That is to say, for example, the above method comprises weighing predetermined amounts of the boron nitride obtained by pyrolysis of borazine and/or borazine derivatives (hereinafter referred to as "borazine-derived boron nitride") and a desired amount of catalyst under atmosphere with a dew point of −60°C or lower, and mixing them under the same atmosphere of the above by means of a V-type mixer or the like. Then, with the resulting mixture, filling a vessel made of a metal such as Zr or Pt, or an inorganic compound such as cubic boron nitride or aluminum oxide. After replacing an atmosphere in the vessel with an inert gas such as nitrogen or argon, placing the vessel in a girdle type, a belt type or another type high-pressure and high-temperature device. And increasing a pressure therein up to 3 GPa or more, preferably up to the range of 5.0 to 8.0 GPa and a temperature therein up to 700°C or more, preferably up to the range of 1200°C to 2000°C, after the above conditions are maintained for a period of one minute or more, preferably for 5 to 30 minutes, decreasing the pressure and temperature therein to obtain the cubic boron nitride sintered body.

The conversion and sintering reaction of borazine-derived boron nitride into cubic boron nitride is necessarily carried out under a predetermined pressure, and under such a pressure, the higher the temperature is, the higher the conversion rate as well as the faster the sintering reaction rate are. If the pressure is less than 3 GPa and the temperature is less than 700°C, the conversion rate of the boron nitride according to borazine into cubic boron nitride and the sintering reaction will be remarkably decreased. Therefore, the pressure and temperature to obtain the cubic boron nitride sintered body are determined to as 3 GPa or more and 700°C or more, respectively.

The catalyst to be added to the boron nitride according to borazine may be those which have heretofore been used in the conversion into cubic boron nitride, and their examples include alkali metals such as Li, Na, K, Rb, Cs and Fr; alkaline earth metals such as Ca, Sr, Ba, Ra, Be and Mg; metals such as Al, Si, Ti, Zr, Hf, V, Nb, Ta, Cr, Mo, W, Sb, Sn and Pb; alloys thereof and metallic compounds such as $Li_3N$, $Li_3BN_2$, $Na_3N$, $Na_3BN_2$, $Ca_3N_2$, $Mg_3N_2$ and AlN. Of these catalysts, aluminum nitride is particularly preferable, because it has a high function of accelerating the conversion into cubic boron nitride and forms the direct bonding with synthesized cubic boron nitride grain without melting. Then an amount of the catalyst to be added is within the range of 5 to 50 mole%, preferably within the range of 10 to 40 mole% based on the total amount, which is regarded as 100 mole%, of the borazine-derived boron nitride and the catalyst. This reason is that when the amount of less than 5 mole%, a catalytic function will be weak, which manner will require a higher pressure and temperature to manufacture the sintered body including cubic boron nitride and aluminum nitride, and will thus be impractical; when it is more than 50 mole%, the catalytic function of aluminum nitride will reach an upper level, and additionally the obtained sintered body will be poor in hardness and abrasion resistance.

The cubic boron nitride sintered body obtained by the above method are composed of fine boron nitride having a low crystallinity and high-purity and a catalyst composed of a metal and/or metallic compounds as starting materials, and the obtained sintered body is compact and has a high hardness.

Further, in manufacturing method of cubic boron nitride sintered body, at least one of the following, (which is not a catalyst) selected from the group consisting of metals such as Fe, Ni and Co and metallic compounds of Ti, Zr, Hf, V, Nb, Ta, Cr, Mo, W and Si (e.g., carbides, nitrides, borides, silicides and oxides of these materials, and mutual solid solutions thereof) may be added to the mixture composed of borazine-derived boron nitride and a catalyst as the starting materials, to obtain the dense sintered body having a high hardness.

Moreover, when a vessel is filled with a mixed powder including the borazine-derived boron nitride, a catalyst and, if necessary, a metal and a metallic compound other than the catalyst so that the mixed powder may be brought into contact with a base such as a cemented tungsten carbide,

a laminated composite hard product comprising the cemented tungsten carbide material and the cubic boron nitride sintered body can be obtained through a high-pressure and high-temperature treatment.

Next, the manufacturing method of the cubic boron nitride in connection with this invention will be explained.

In the manufacturing method of the cubic boron nitride in connection with this invention, at first a sintered body is produced in the same manner as in the method of the aforesaid cubic boron nitride sintered body. Then, removing the catalyst from the sintered body to prepare cubic boron nitride. In order to obtain the cubic boron nitride by removing the catalyst easily from the sintered body, it is particularly preferable that, in the manufacturing conditions of the sintered body, lowering pressure or temperature, for example, so as to become the conversion rate into the cubic boron nitride being about 70% or so.

As the method for removing the catalyst, it is exemplified, for example, a method which comprises the steps of dipping the cubic boron nitride sintered body into a solution such as an acid, an alkaline or the like, and heating, if necessary, to dissolve and remove the catalyst. The residue thus treated to dissolve and remove the catalyst is further submitted to a repeated washing and drying treatment by using water, an organic solvent or the like, to obtain cubic boron nitride having less impurities.

More specifically, when the aluminum nitride is used as the catalyst, the aluminum nitride can be removed by dipping the sintered body into a caustic alkali solution of NaOH, KOH or the like at 200 to 400°C, or into a boiling aqueous strong caustic alkali solution such as NaOH. At this time, for example, when hexagonal boron nitride remains in the sintered body because of low conversion rate into cubic boron nitride, the hexagonal boron nitride can be removed physically by the use of the difference of specific gravity between the cubic boron nitride and the hexagonal boron nitride.

The method for preparing cubic boron nitride of this invention provides a high conversion rate under conditions of a low pressure and temperature.

Further, the cubic boron nitride obtained from the aforesaid method is highly pure and fine, therefore it has excellent sintering properties. For example, when such a cubic boron nitride is mixed with other additives and the resulting mixture is then converted into a cubic boron nitride sintered body under high-pressure and high-temperature conditions, the production of the dense sintered body having a high hardness can be accomplished under low-pressure and low-temperature conditions.

In the above, the reason why the cubic boron nitride sintered body and the cubic boron nitride have been obtained with a high conversion rate is considered as follows:

That is to say, by the inventors of this invention, it has been elucidated that the lower the crystallinity of boron nitride, the higher its conversion rate into the cubic boron nitride and that boron nitride prepared by the pyrolysis of borazine under a certain pressure includes a permissible amount of oxygen and, particularly, has the ideal low crystallinity. An experiment which is fundamental to these facts will be discussed as follows: First of all, borazine was formed by reducing B-trichloroborazine, and a gold capsule was airtightly filled with the borazine. A pyrolysis was carried out under a pressure of 100 MPa or less and at a temperature of 700°C or less by the use of a hydrothermal synthetic device in order to prepare high-purity boron nitride. By powder X-ray diffractometry, infrared absorption spectroscopy and transmission electron microscope, crystallinity and bonding state were investigated for the high-purity boron nitride thus obtained. As a result thereof, it was elucidated that boron nitride formed by the heating treatment under a pressure of 100 MPa or less and at a temperature of 700°C or less was such an amorphous as shown in Figure 1. On the other hand, according to investigations on the morphology of high-purity boron nitride by the use of a scanning electron microscope, it was made definite that the above-mentioned high-purity boron nitride had a spherical or a fibrous shape. These results indicate that a cleavage reaction and a condensation reaction were carried out simultaneously under the coexistence of a gaseous phase and a liquid phase at the time of the pyrolysis of borazine under a certain pressure.

Further, Figure 2 shows the conversion rate of a mixture of amorphous boron nitride manufactured by pyrolyzing borazine under a pressure of 6.5 GPa and 20 mole% of aluminum nitride. Amorphous boron nitride can be converted into cubic boron nitride with more ease than crystalline boron nitride, and the activation energy for the conversion of amorphous boron nitride is at a level of 20 kcal/mol below that of crystalline boron nitride. The above-mentioned results of researches occupy a fundamental portion of this invention.

Now, this invention will further be described in detail in reference to examples, but it should be noted that this invention is not limited thereto.

Example 1

(1) Preparation of amorphous boron nitride

B-trichloroborazine was reduced to produce borazine. This borazine (liquid) was put in gold capsules, and these capsules were sealed and placed in a cone seal type pressure vessel. A pressure in the vessel was maintained at 100 MPa, and the capsules were treated at a variety of temperatures for one hour. At every temperature, a white solid was prepared.

On investigating the crystalline structure of these solids with a X-ray powder diffractometry, it was confirmed that all of the solids were amorphous. Further, for these white solids, an infrared (IR) absorption spectrum analysis was carried out,

and there appeared absorptions based on stretching vibrations of N—H, B—H and B—N at positions of 3400 $cm^{-1}$, 2520 $cm^{-1}$ and 1400 $cm^{-1}$, respectively.

In figure 3, there are shown ratios of absorbances on the basis of the B—H and B—N stretching vibrations at various pyrolysis temperatures. As understood from this drawing, a content of hydrogen in amorphous boron nitride decreases, as the temperature of the pyrolysis rises.

(2) Measurement of conversion rate into cubic boron nitride.

To each of the amorphous boron nitride products prepared at various temperatures by the pyrolysis were added 20 mole% of aluminum nitride, and mixing was then carried out. The resulting mixed powders were treated under conditions of a pressure of 6.5 GPa and a temperature of 1200°C for 10 minutes in order to accomplish sintering.

For each of the prepared respective sintered bodies, the crystallinity of cubic boron nitride therein was measured by means of an X-ray diffractometry, and a conversion rate of amorphous boron nitride was calculated after the correction for the preferred orientation of particles on measuring by X-ray diffraction method.

The results are shown in the form of relations between the conversion rates and temperatures of the pyrolysis in Figure 4. As is definite from this drawing, the amorphous boron nitride material prepared at a pyrolyzing temperature of 250°C had as high a conversion rate as 90 mole%.

(3) Measurement of activation energy

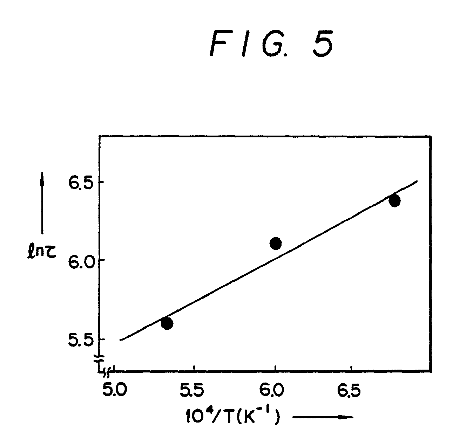

The amorphous boron nitride prepared by pyrolyzing borazine at 250°C was treated at temperatures (T) of 1200°C, 1400°C and 1600°C under a pressure of 6.5 GPa in order to measure reaction times (τ) till the conversion rate from amorphous boron nitride to cubic boron nitride reached 90 mole%, and there was obtained such a straight line as shown in Figure 5 which represented relations between 1n τ and $10^4$/T. The activation energy for the direct conversion reaction from amorphous boron nitride to cubic boron nitride was about 11 kcal/mol when calculated from an inclination of this straight line.

Moreover, an activation energy in a direct conversion reaction from hexagonal boron nitride to cubic boron nitride was within the range of 150 to 250 kcal/mol, and an activation energy in the case that aluminum nitride was added to hexagonal boron nitride was about 40 kcal/mol.

These results indicate that the activation energy of amorphous boron nitride into cubic boron nitride regarding this invention is very low.

## Example 2

The same procedure as in Example 1 was repeated with the exception that borazobiphenyl was substituted for borazine in order to prepare white solids. These solids all were amorphous boron nitride products.

The thus prepared amorphous boron nitride were sintered at a temperature of 1500°C and a pressure of 6 GPa for 20 minutes.

For each of the resulting sintered bodies, an amount of cubic boron nitride therein was analyzed by means of an X-ray diffractometry in order to calculate a conversion rate. The results are about the same as in Figure 4 referred to above.

## Example 3

Borazine was decomposed at 700°C in an argon atmosphere of 100 MPa to prepare boron nitride, and the thus prepared boron nitride and aluminum nitride were weighed out in the proportion of 80 mole% and 20 mole% respectively so that the total amount thereof was 550 mg. These materials were mixed in an agate mortar in a glove box filled with argon, and a zirconium vessel was then charged with the resulting mixture. Next, this vessel was transferred to a desiccator, and deaeration was carried out by means of a vacuum pump and the desicator was then filled with argon. In the desiccator, a lid was put on the vessel, and sealing was accomplished. Afterward, the vessel was taken out from the desiccator and was placed in a girdle type high-pressure and high-temperature device. The material in the vessel was treated at a temperature of 1300°C and a pressure of 6.5 GPa for 15 minutes in order to prepare sample 1 according to the manufacturing method in connection with this invention. It was found from results of an X-ray diffractometry that no hexagonal boron nitride was present in the thus prepared sintered body of sample 1, i.e. 100% of sample 1 was cubic boron nitride. Further, the sintered body of sample 1 was a dense sintered body, and as a result of a hardness measurement by a micro-Vickers, it was found that sample 1 had a hardness of 6000 kg/$mm^2$ HV.

For comparison, a mixture of 80 mole% of commercially available hexagonal boron nitride and 20 mole% of aluminum nitride was treated under the same high-pressure and high-temperature conditions as described above to prepare the sintered body of comparative sample 1, and as a result of an X-ray diffractometry, it was found that both cubic boron nitride and hexagonal boron nitride were present in the prepared sintered body, which had a hardness of 3000 kg/$mm^2$ HV.

## Example 4

Borazine was decomposed at 900°C in an argon gas atmosphere of 100 MPa to prepare boron nitride, and the thus prepared boron nitride and aluminum nitride were weighed out in the proportion of 90 mole% and 10 mole% respectively so that the total amount thereof was 500 mg. To these materials, 80 mg of a titanium/tantalum nitride solid solution (Ti, Ta)$N_{0.8}$, 10 mg of Al and 10 mg of Ni were added to prepare a mixed powder. The prepared powdery mixture was then handled in the manner as in Example 3 and was placed in a high-pressure and high-temperature device. Next, the mixture was treated at a

pressure of 5.0 GPa and a temperature of 1800°C for 5 minutes in order to prepare sample 2 according to the manufacturing method in connection with this invention. It was found from results of an X-ray diffractometry that no hexagonal boron nitride was present in the sintered body of sample 2, i.e. 100% of sample 2 was cubic boron nitride. Further, the sintered body of sample 2 was a dense sintered body, and was 5300 kg/mm$^2$ HV in hardness.

For comparison, 500 mg of a mixture of 90 mole% of commercially available hexagonal boron nitride and 10 mole% of aluminum nitride was weighed out. To this mixture, there were added 80 mg of a titanium/tantalum nitride solid solution (Ti, Ta)$N_{0.8}$, 10 mg of Al and 10 mg of Ni in order to prepare a mixed powder. The prepared powdery mixture was treated according to a direct method under the same high-pressure and high-temperature conditions as described above, so that a sintered body of comparative sample 2 was prepared. It was found from results of an X-ray diffractometry that both cubic boron nitride and hexagonal boron nitride were present in the prepared sintered body, which had a hardness of 2400 kg/mm$^2$ HV.

Example 5

The procedure of Example 3 was repeated with the exception that borzaonaphthalene was substituted for borazine in order to prepare boron nitride through a pyrolysis, and 450 mg of a mixture of 70 mole% of the thus prepared boron nitride and 30 mole% of aluminum nitride was weighed out. To the mixture, 100 mg of a $TiN_{0.8}C_{0.2}$ solid solution, 20 mg of WC, 15 mg of Ni and 15 mg of Mo were added in order to prepare a mixed powder, which was then handled in the same manner as in Example 3. This powdery mixture was introduced into a zirconium vessel while brought into contact with a 10 φmm × 2 mm cemented tungsten carbide (WC — 6% Co alloy), and was placed in a high-pressure and high-temperature device. Next, a treatment was carried out at a pressure of 8.0 GPa and a temperature of 1400°C for 10 minutes to prepare sample 3 according to the manufacturing method in connection with this invention, this sample 3 being a composite hard laminate of cubic boron nitride and the cemented tungsten carbide. It was found from results of an X-ray diffractometry that no hexagonal boron nitride was present in sample 3, i.e. 100% of sample 3 was cubic boron nitride. Further, the sintered body of sample 3 was 5000 kg/mm$^2$ HV in hardness.

Example 6

The respective sintered bodies prepared in Examples 3, 4 and 5 were each mounted, by a silver brazing, on a knife edge of JIS standard TNP 332 made from a WC — 10% Co alloy, and cutting test was carried out for the samples under the following conditions.

Conditions of cutting test by turning

Materials to be cut SKH 3 (HRc 59 to 62 hardened steel)

Cutting speed 90 m/min

Cutting width 0.3 mm

Feed rate 0.1 mm/rev

Cutting time 20 min

As a result of the cutting test, samples 1, 2 and 3 prepared according to the manufacturing method in connection with this invention exhibited normal abrasion states, and no chipping occured on cutting edges thereof. On the contrary, the comparative samples 1 and 2 prepared in Examples 3 and 4 had about three times greater flank abrasion loss, a boundary abrasion also appeared, and chipping occured on the cutting edge thereof.

Example 7

The procedure of Example 3 was repeated with the exception that the treatment in a girdle type high-pressure and high-temperature device was carried out at a pressure of 6.5 GPa and a temperature of 1400°C for a period of 10 minutes to prepare sample 4.

It was found from results of an X-ray diffractometry that no hexagonal boron nitride was present in sample 4, i.e. 100% of sample 4 was cubic boron nitride. Further, this sample 4 was a dense sintered body, and as a result of a hardness measurement by a micro-Vickers, it was found that sample 4 had a hardness of 6000 kg/mm$^2$ HV.

Example 8

In the same manner as in Example 7, boron nitride prepared by the pyrolysis of borazine and aluminum nitride were weighed in the proportion of 60 mole% and 40 mole% respectively so that the total amount thereof might be 550 mg. These materials were placed in a girdle type high-pressure and high-temperature device in the same manner as in Example 7, and they were then treated at a pressure of 6.5 GPa and a temperature of 1300°C for 15 minutes in order to prepare sample 5 according to the manufacturing method in connection with this invention. It was found from results of an X-ray diffractometry that no hexagonal boron nitride was present in sample 5, i.e. 100% of sample 5 was cubic boron nitride. Further, the hardness of sampe 5 was 5500 kg/mm$^2$ HV.

For comparison, a mixture of 60 mole% of commercially available hexagonal boron nitride and 40 mole% of aluminum nitride was treated under the same high-pressure and high-temperature conditions as described above, and as a result of an X-ray diffractometry, it was found that both cubic boron nitride and hexagonal boron nitride were present in the prepared sintered body, which had a hardness of 2500 kg/mm$^2$ HV.

Example 9

In the same manner as in Example 7, boron nitride prepared by the pyrolysis of borazine and aluminum nitride were weighed out in the proportion of 90 mole% and 10 mole% respectively so that the total amount thereof was 550 mg. These materials were placed in a girdle type high-pressure and high-temperature device in the same manner as in Example 7, and they were then treated at a pressure of 8.0 GPa and a temperature of 1800°C for 5 minutes in order to prepare sample 6 according to the manufacturing method in connection with this invention. It was found from results of an X-ray diffractometry that no hexagonal boron nitride was present in sample 6, i.e. 100% of sample 6 was cubic boron nitride. Further, the hardness of sample 6 was 6300 kg/mm$^2$ HV.

For comparison, a mixture of 90 mole% of commerically available hexagonal boron nitride and 10 mole% of aluminum nitride was treated under the same high-pressure and high-temperature conditions as described above, and as a result of an X-ray diffractometry, it was found that both cubic boron nitride and hexagonal boron nitride were present in the prepared sintered body, which had a hardness of 3200 kg/mm$^2$ HV.

Example 10

The procedure of Example 7 was repeated with the exception that borazonaphthalene was substituted for borazine in order to prepare boron nitride through a pyrolysis, and to 540 mg of a mixture comprising 80 mole% of the thus prepared boron nitride and 20 mole% of aluminum nitride, 10 mg of aluminum were added. The resulting mixed powder was, in the same manner as in Example 7, treated at a pressure of 4.5 GPa and a temperature of 1700°C for 15 minutes in order to prepare sample 7 according to the manufacturing method in connection with this invention. It was found from results of an X-ray diffractometry that no hexagonal boron nitride was present in sample 7, i.e. 100% of sample 7 was cubic boron nitride. Further, the hardness of sample 7 was 5800 kg/mm$^2$ HV.

For comparison, a mixture of 70 mole% of commercially available hexagonal boron nitride, 20 mole% of aluminum nitride and 10 mole% of aluminum was treated under the same high-pressure and high-temperature conditions as described above, and as a result of an X-ray diffractometry, it was found that both cubic boron nitride and hexagonal boron nitride were present in the prepared sintered body, which had a hardness of 2800 kg/mm$^2$ HV.

Incidentally, after the X-ray diffractometry and the measurement of the hardness, cubic boron nitride prepared in Examples 7 to 9 were boiled in a 2 N aqueous caustic soda solution for a period of 30 minutes in order to obtain 100% cubic boron nitride products.

As understood from the foregoing, in the boron nitride manufacturing method of this invention, an activation energy at the conversion reaction into cubic boron nitride is very small, therefore it is possible to manufacture amorphous boron nitride in which the conversion rate into cubic boron nitride is high. Accordingly, the cubic boron nitride is suitable for a material for the cubic boron nitride sintered body to which much attention is now paid as a material for tools and heat sinks in electronic circuits, and it is thus apparent that the industrial value of the cubic boron nitride is great.

Further, the method for preparing cubic boron nitride which is employed, as the starting material, boron nitride prepared by this invention provides excellent sintering effect, so that a dense and hard cubic boron nitride sintered body can be prepared under lower pressure and temperature conditions. Moreover, the above method does not use cubic boron nitride as a starting material and is based on a direct method in which a high-pressure and high-temperature treatment is utilized only once, therefore it permits manufacturing the desired product in an inexpensive and economical manner. The cubic boron nitride sintered body prepared by the manufacturing method in connection with this invention has a high hardness and denseness, therefore it is excellent in abrasion resistance and toughness. Since, having such properties, the sintered body thus prepared can be applied to materials for cutting tools, for example, turning tools and rotary drilling tools such as a reamer, and end mill and a drill, abrasion resistant tools such as a cutter and jigs for machine parts, and grinding tools. Additionally, since the cubic boron nitride has a high thermal conductivity and electrical resistance, the sintered body prepared in connection with this invention can also be applied to materials for heat sinks in electronic circuits. In consequence, it is definite that the sintered body obtained by the above method is remarkably useful in industrial fields.

Furthermore, the method for preparing cubic boron nitride in connection with this invention permits synthesizing cubic boron nitride at a lower pressure and temperature than in the conventional case that hexagonal boron nitride is employed as a starting material. According to the above method, the conversion rate into cubic boron nitride is as high as 100% and the obtained cubic boron nitride is highly pure and fine.

**Claims**

1. A method for preparing boron nitride which comprises pyrolyzing at least one compound selected from the group consisting of borazine and/or a borazine derivative at a temperature of 150 to 700°C and at a pressure of 10 MPa or more.

2. The method for preparing boron nitride of Claim 1, wherein said borazine and/or borazine derivative are selected from the group consisting of borazine, borazonaphthalene, borazobiphenyl and 2,4-diaminoborazine.

3. The method for preparing boron nitride of Claim 1, wherein said pyrolysis is carried out at a temperature of 200 to 300°C and at a pressure of 50 to 150 MPa for 30 to 120 minutes.

**Patentansprüche**

1. Verfahren zur Herstellung von Bornitrid, dadurch gekennzeichnet, dass man wenigstens eine Verbindung, ausgewählt aus der Gruppe, bestehend aus Borazin und/oder einem Borazinderivat bei einer Temperatur von 150 bis 700°C und bei einem Druck von 10 MPa oder mehr pyrolysiert.

2. Verfahren zur Herstellung von Bornnitrid gemäss Anspruch 1, bei dem das Borazin und/oder Borazinderivat ausgewählt ist aus der Gruppe, bestehend aus Borazin, Borazonaphthalin, Borazobiphenyl und 2,4-Diaminoborazin.

3. Verfahren zur Herstellung von Bornitrid gemäss Anspruch 1, bei dem die Pyrolyse bei einer Temperatur von 200 bis 300°C und bei einem Druck von 50 bis 150 MPa während 30 bis 120 Minuten durchgeführt wird.

**Revendications**

1. Procédé pour le préparation de nitrure de bore, qui comprend la pyrolyse d'au moins un composé choisi dans le groupe comprenant le borazole et/ou un dérivé du borazole, à une température comprise entre 150 et 700°C et à une pression de 10 MPa ou plus.

2. Procédé pour la préparation de nitrure de bore selon la revendication 1, dans lequel ledit borazole et/ou ledit dérivé du borazole sont choisis dans le groupe comprenant le borazole, le borazonaphtalène, le borazobiphényle et le 2,4-diaminoborazole.

3. Procédé pour la préparation de nitrure de bore selon la revendication 1, dans lequel on effectue ladite pyrolyse à une température comprise entre 200 et 300°C et à une pression de 50 à 150 MPa pendant 30 à 120 minutes.

FIG. 1

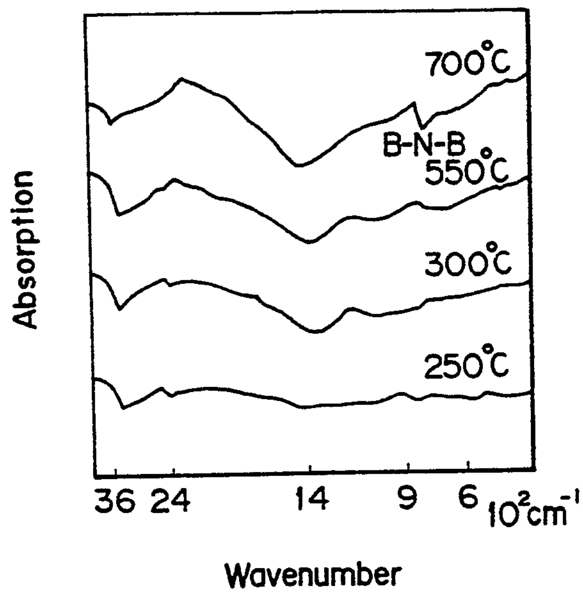
700°C
B-N-B
550°C
300°C
250°C
Absorption
36 24 14 9 6 10²cm⁻¹
Wavenumber

FIG. 2

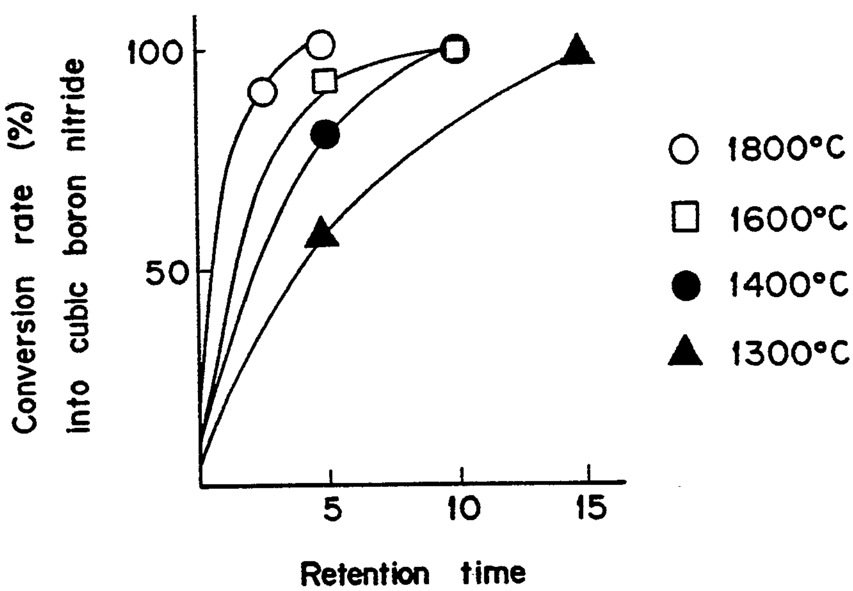
100
50
Conversion rate (%) into cubic boron nitride
5 10 15
Retention time
1800°C
1600°C
1400°C
1300°C

FIG. 3

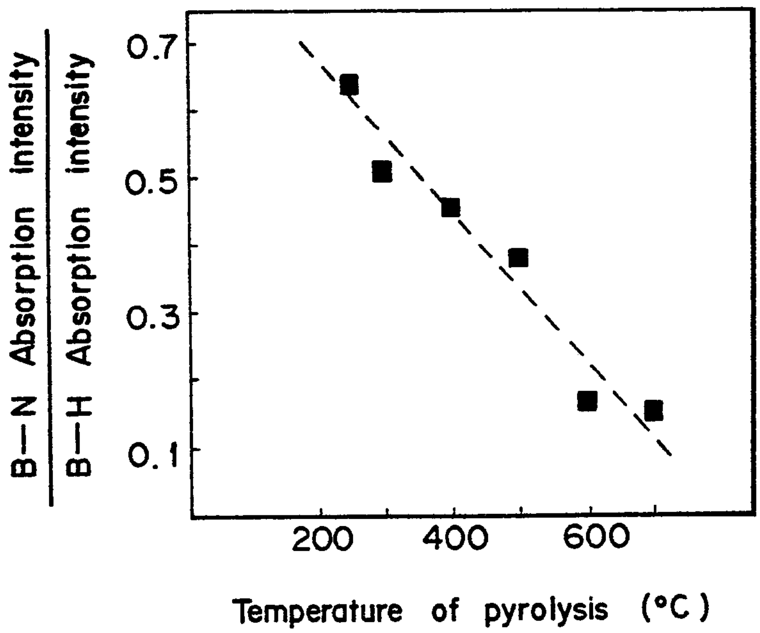
B—N Absorption intensity / B—H Absorption intensity
0.7
0.5
0.3
0.1
200
400
600
Temperature of pyrolysis (°C)

FIG. 4

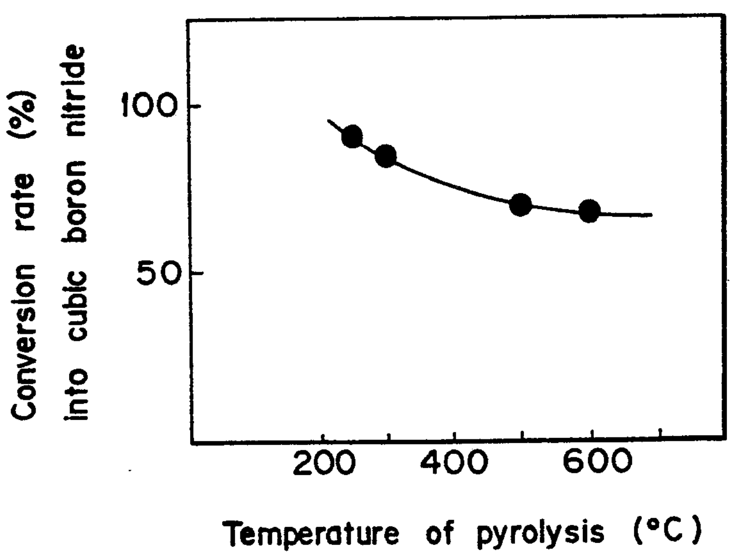
Conversion rate (%) into cubic boron nitride
100
50
200
400
600
Temperature of pyrolysis (°C)

FIG. 5